# EUROPÄISCHE PATENTSCHRIFT

(11) **EP 0 544 969 B1**
(45) Veröffentlichungstag und Bekanntmachung des Hinweises auf die Patenterteilung: **05.03.1997**
(21) Anmeldenummer: 91810952.1
(22) Anmeldetag: 06.12.1991
(51) Int. Cl.: G01N 27/447, G01N 27/26

(54) **Elektrophoretische Trennvorrichtung und elektrophoretisches Trennverfahren**
Apparatus and method for electrophoretic separation
Appareil et procédé pour séparations électrophorétiques

(43) Veröffentlichungstag der Anmeldung: 09.06.1993
(73) Patentinhaber: CIBA-GEIGY AG, 4002 Basel (CH)
(72) Erfinder: Manz, Andreas, Dr., CH-4126 Bettingen (CH)

(56) Entgegenhaltungen:
- EP-A- 0 376 611
- US-A- 3 964 992
- US-A- 4 908 112
- PATENT ABSTRACTS OF JAPAN vol. 013, no. 250 (P-882)12. Juni 1989 & JP-A-1 049 952 ( SHIMADZU CORP ) 27 Februar 1989
- PATENT ABSTRACTS OF JAPAN vol. 015, no. 347 (P-1246)3. September 1991 & JP-A-3 131 750 ( YOKOGAWA ELECTRIC CORP ) 5 Juni 1991
- JOURNAL OF CHROMATOGRAPHY. Bd. 456, Nr. 1, 1. Januar 1988, AMSTERDAM NL Seiten 3 - 20; K.A.RAMSTEINER: 'SYSTEMATIC APPROACH TO COLUMN SWITCHING'

## Beschreibung

Die Erfindung betrifft eine elektrophoretische Trennvorrichtung gemäss Oberbegriff des Patentanspruchs 1 und ein elekrophoretisches Trennverfahren gemäss Oberbegriff des Patentanspruchs 14.

Im Zuge der Automatisierung von Herstellungsverfahren und von Analyseverfahren beispielsweise in der Analytischen Chemie, der Prozessmesstechnik, der Umweltanalytik oder der medizinischen Diagnostik gewinnen automatisierte Trennverfahren und dabei insbesondere elektrophoretische Trennverfahren zunehmend an Bedeutung. Elektrophoretische Trennverfahren werden zur Auftrennung von Proben in ihre Bestandteile zu Analysezwecken aber auch zur Aufkonzentrierung von Reaktionsprodukten eingesetzt, welche wiederum über Rückkoppelschleifen beispielsweise zur Steuerung der Konzentration von Ausgangsprodukten oder Zusätzen eingesetzt werden können usw. Die dabei eingesetzten Trennvorrichtungen arbeiten üblicherweise kontinuierlich und sind meist als sogenannte Fliess-Injektions-Analysesysteme ausgebildet. Bei derartigen Systemen wird üblicherweise ein Trägermedium durch ein Kapillarsystem transportiert, in welches an geeigneter Stelle eine zu analysierende bzw. zu trennende Probe injiziert wird. Der Transport der Medien erfolgt vielfach mit Hilfe geeigneter Pumpen; es besteht aber auch die Möglichkeit geeignete Elektolyten als Trägermedium zu verwenden und den Transport mit Hilfe eines elektrischen Feldes zu bewerkstelligen, wobei der elektroosmotische Effekt ausgenützt wird.

Die Auftrennung der Probe in ihre Komponenten erfolgt elekrophoretisch im angelegten elektrischen Feld. Das elektrische Feld ist eine wesentliche Grösse für die Trennleistung der Vorrichtung und auch entscheidend für die Dauer der Auftrennung. Für gute Trennleistungen sind über die wirksame Kanallänge elektrische Feldstärken von 20 kV/m und mehr erwünscht. Zur Beschleunigung der für die Auftrennung erforderlichen Zeit sind höhere Feldstärken wünschenswert. Bei der Elektrophorese mit Glaskapillaren von üblicherweise 0,5 - 2 m Länge stösst man jedoch bei etwa 30 - 40 kV/m an eine durch das Kapillarenmaterial und die umgebende Luft gegebene Grenze. Daraus resultieren Trennzeiten von etwa 30 Minuten für einen Trenndurchgang. Können nicht alle Komponenten in einem Durchgang getrennt werden, so wird der betreffende Teil der Probe erneut injiziert und eine weitere Trennung durchgeführt usw. Da in vielen Fällen eine Vielzahl von Trenndurchgängen erforderlich ist, um alle Komponenten voneinander zu trennen, ergeben sich insgesamt Trenndauern von etlichen Stunden und mehr.

In einem Artikel von K.A. Ramsteiner im Journal of Chromatography, 456(1988)3 - 20, Seiten 3 - 20 sind chromatographische Analysesysteme beschrieben, die Gebrauch von Glaskapillaren machen. Insbesondere werden Netzwerke von zwei oder mehreren über Ventile zusammengeschalteten Glaskolumnen beschrieben und Varianten des Zusammenschaltens angegeben. Derartig aufgebaute Trennvorrichtungen mit Glaskappillaren weisen jedoch oftmals interne Totvolumina im Bereich von Verbindungskapillaren, Injektionsventilen oder Netzwerkventilen etc. auf, die sich sehr ungünstig auf die Trennleistung der Vorrichtung auswirken können.

In einem Artikel von M.Jansson et. al. im Journal of High Resolution Chromatography, 1989, pages 797 - 801 sind einige wesentliche Aspekte von elektrophoretischen Trennverfahren, insbesondere der Kapillar-Elektrophorese, beschrieben. In dem Artikel wird auch darauf hingewiesen, dass der Wunsch besteht, derartige elektrophoretische Trennsysteme zu miniaturisieren und vorzugsweise auf Siliziummaterial zu integrieren. Siliziummaterial wird dabei insbesondere ob seiner aus der Halbleiterindustrie bekannten guten Bearbeitbarkeit geschätzt.

In der US-A-4,908,112 ist eine miniaturisierte Analysevorrichtung für biologische Untersuchungen beschrieben. Insbesondere handelt es sich dabei um eine auf einem Silizium-Wafer ausgebildete elektrophoretische Trennvorrichtung. Eine meanderförmige Anordnung des kapillarenförmigen Kanals erlaubt eine Verlängerung der Trennstrecke im Rahmen der begrenzten Abmessungen des Silizium-Wafers.

Abgesehen von den Grenzen, welche die Abmessungen des Silizium-Wafers der erreichbaren Trennlänge und damit den erreichbaren Trennergebnissen setzen, steht der Wunsch nach einer möglichst grossen Trennlänge dem Wunsch nach einer weiteren Miniaturisierung der elektrophoretischen Trennvorrichtung entgegen. Darüber hinaus besteht ein weiteres sehr wesentliches Problem bei der Integration derartiger Kapillar-Elektrophorese Vorrichtungen auf Siliziummaterial, anderen halbleitenden Materialien oder auch auf Glas vor allem auch darin, dass die über die gesamte Kanallänge wirkenden elektrischen Feldstärken sehr begrenzt sind. Entscheidend für die einsetzbaren Feldstärken ist die Güte der Isolationsschicht zwischen dem im kapillarenförmigen Kanal transportierten Trägermedium und dem halbleitenden Material. Diese Isolierschicht wird üblicherweise durch eine natürliche Siliziumoxidschicht gebildet. Es besteht auch die Möglichkeit, diese natürliche Isolationsschicht durch weitere künstlich aufgebrachte Isolationsschichten zu verstärken. Insbesondere kommen dazu beispielsweise die aus der Halbleiterindustrie hinlänglich bekannten Siliziumnitrid-, Tantalsilizid- oder weitere Siliziumoxidschichten in Frage. Es versteht sich aber, dass derartige Isolationsschichten nicht in beliebig grossen Dicken aufgebracht werden können. Ausserdem ist jeder derartige zusätzliche Behandlungsschritt nur mit hohem technischen Aufwand realisierbar und mit zusätzlichen Kosten verbunden.

In der JP-A-1 049 952 ist eine isokinetische elektrophoretische Trennvorrichtung offenbart, die einen als geschlossene Schleife ausgebildeten Kanal aufweist, welcher durch mehrere Ventile in drei Kanalabschnitte aufgeteilt wird. Der eigentliche isokinetische Elektrophoresevorgang zerfällt in eine Mehrzahl einzelner elektrophoretischer Schritte. Vor Beginn eines solchen elektrophoretischen Schrittes muss jedesmal dafür Sorge getragen werden, dass einer der drei Kanalabschnitte zur elektrischen Isolierung vollständig mit einer Isolatorflüssigkeit gefüllt ist, die beiden anderen Kanalabschnitte stellen die eigentliche Elektrophoresestrecke dar und beinhalten die Leitflüssigkeit, die Endflüssigkeit und die Probe. Zur Beendigung des elektophoretischen Schrittes werden die Elektroden von der Spannungsquelle getrennt. In der Folge wird über ein komplexes Ventilsystem der in Wanderungsrichtung nächste Kanalabschnitt mit Isolatorflüssigkeit gefüllt, der im vorangehenden Schritt mit Isolatorflüssigkeit gefüllte Kanalabschnitt vollkommen von dieser befreit und mit Leitflüssigkeit gefüllt, um die korrekte räumliche Anordnung von Leit-, End-, und Isolatorflüssigkeit für den nächsten elektrophoretischen Schritt zu gewährleisten.

Es besteht daher die Aufgabe, diesen Nachteilen der aus dem Stand der Technik bekannten elektrophoretischen Trennvorrichtungen abzuhelfen. Es soll eine elektrophoretische Trennvorrichtung geschaffen werden, welche eine sehr hohe Trennleistung besitzt. Dabei soll es möglich sein, die Vorrichtung noch weiter zu miniaturisieren und im kostengünstigen Massenherstellungsverfahren zu produzieren. Es soll auch ein elektrophoretisches Trennverfahren entwickelt werden, welches auch bei an sich begrenzten Kanallängen komplexe Analysen ermöglicht und es überdies erlaubt, die zu analysierende bzw. in ihre Komponenten zu trennende Probe hohen elektrischen Feldstärken auszusetzen. Darüber hinaus soll das Verfahren schnell durchführbar sein und in kurzer Zeit hohe Trennleistungen liefern.

Alle diese und noch weitere damit zusammenhängende Aufgaben werden durch eine elektrophoretische Trennvorrichtung gemäss Kennzeichen des Patentanspruchs 1 und durch ein elektrophoretisches Trennverfahren gemäss Kennzeichen des Patentanspruchs 14 gelöst. Besonders bevorzugte Ausführungsvarianten der erfindungsgemässen Vorrichtung und des erfindungsgemässen Verfahrens sind Gegenstand der jeweiligen zugehörigen abhängigen Patentansprüche.

Insbesondere wird eine elektrophoretische Trennvorrichtung für Zonenkapillarelektrophorese umfassend einem Kanal, welcher als geschlossene Schleife ausgebildet ist, welcher mit Ein- und Ausgangsöffnungen ausgestattet ist und welcher wenigstens eine Einspeiseöffnung für eine zu untersuchende Probe aufweist, ferner umfassend Elektroden im Bereich der Ein- und Ausgangsöffnungen, von welchen im Betriebszustand jeweils mindestens zwei mit einer Spannungsquelle derart verbunden sind, dass entlang des Kanals ein elektrisches Feld einstellbar ist, geschaffen. Erfindungsgemäss ist die elektrophoretische Trennvorrichtung dadurch gekennzeichnet, dass die Ein- und Ausgangsöffnungen sowie die Elektroden relativ zu dem Kanal derart angeordnet sind, dass sich ein durch eine der Eingangsöffnungen eingespeistes Trägermedium in beide Richtungen des schleifenförmigen Kanals aufteilt. Auf diese Weise sind trotz begrenzter Abmessungen der Vorrichtung beliebig lange Trennstrecken realisierbar, die einzig von der Anzahl der Umläufe der zu trennenden Probe im geschlossenen Kanal abhängen. Bei jedem Umlauf addiert sich die von der Probe "empfundene" elektrische Feldstärke zu der der vorhergehenden Umläufe.

Vorzugsweise ist der Kanal kapillarenartig ausgebildet.

In einer bevorzugten Ausbildungsvariante ist der Kanal in n Kanalabschnitte unterteilt und weist zusätzlich zu der Einspeiseöffnung für die Probe 2n Ein- und Ausgangsöffnungen auf, die im Verbindungsbereich der Kanalabschnitte angeordnet sind.

Besonders vorteilhaft ist es, wenn jedem Kanalabschnitt Elektroden zugeordnet sind, welche mit der Spannungsquelle derart verbindbar sind, dass das elektrische Feld jeweils im wesentlichen entlang des Kanalbereichs anlegbar ist, der zwischen den betreffenden, mit unterschiedlichen elektrischen Potentialen beaufschlagten Elektroden angeordnet ist. Dabei sind die Elektroden im allgemeinen nicht direkt in dem jeweiligen Kanalbereich angeordnet, sondern sind im Bereich der Ein- und Ausgangsöffnungen vorgesehen. Durch Anordnung der Elektroden in den jeweiligen offen ausgebildeten Vorrats- und Auffanggefässen für das Trägermedium kann eine Blasenbildung im jeweiligen Kanalbereich vermieden werden. Auf diese Weise ausgebildet, kann die zu trennende Probe einem weitaus grösseren elektrischen Feld ausgesetzt werden. Die für das verwendete Material verträgliche Potentialdifferenz wird jeweils nur in einem Teilbereich des Kanals angelegt. Die gesamte entlang eines Umlaufes auf die zu trennende Probe wirkende elektrische Feldstärke entspricht der Summe der in den Teilbereichen jeweils auf die Probe einwirkenden Feldstärken. Die Gesamtfeldstärke, der eine zu trennende Probe ausgesetzt ist entspricht wiederum der Feldstärke bei einem Umlauf multiplitiert mit der Anzahl der Umläufe im geschlossenen Kanal, sodass die resultierende Feldstärke ein Vielfaches der im jeweiligen Teilbereich des Kanals wirkenden Feldstärke beträgt.

Besonders vorteilhaft ist es auch, wenn der mit dem elektrischen Feld beaufschlagte Kanalbereich wenigstens zwei Kanalabschnitte umfasst, deren Verbindungsbereich eine Elektrode zugeordnet ist, die ein Potential aufweist, welches zwischen den Potentialen der Quellelektroden des elektrischen Feldes liegt.

Als Spannungsquelle kommt vorzugsweise eine regelbare Gleichspannungsquelle zum Einsatz. Dabei werden die Elektroden vorzugsweise mit Hilfe eines Relais paarweise derart mit der Spannungsquelle verbunden, dass ein entlang der einzelnen Kanalbereiche zyklisch wanderndes elektrisches Feld ertsteht.

Besonders vorteilhaft ist der Kanal als n-Eck ausgebildet, dessen Seiten durch die Kanalabschnitte gebildet ist. Dabei umfasst der Kanal wenigstens drei Kanalabschnitte.

In einer bevorzugten Ausführungsvariante ist die erfindungsgemässe elektrophoretische Trennvorrichtung als miniaturisiertes Bauteil ausgebildet, welches vorzugsweise zwei Teile umfasst, die als ein Körperteil und ein Deckelteil, vorzugsweise aus Glas, ausgebildet sind, wobei der Kanal, die Ein- und Auslassöffnungen sowie die Einspeiseöffnung vorzugsweise am Körperteil vorgesehen sind.

Für die Anwendung von aus der Halbleiterindustrie bekannten Massenherstellungstechniken ist es besonders vorteilhaft, wenn das Körperteil ein vorzugsweise photolithographisch oder mikromechanisch bearbeitetes Plättchen aus Glas oder aus halbleitendem Material, vorzugsweise ein Siliziumplättchen, ist.

Für den Einsatz der erfindungsgemässen elektrophoretischen Trennvorrichtung zu Analysezwecken ist es besonders vorteilhaft, wenn sie wenigstens einen Detektor, beispielsweise einen Absorptionsdetektor für ultraviolette Strahlung oder für das sichtbare Spektrum oder einen Lumineszenzdetektor oder einen elektrochemischen Detektor umfasst, der entlang des Kanals angeordnet ist.

Zweckmässigerweise besitzt der Kanal eine Querschnittsfläche von etwa 100 µm² bis etwa 5000 µm².

Bei dem erfindungsgemässen elektrophoretischen Trennverfahren mittels Zonenkapillarelektrophores wird eine Probe über eine Einspeiseöffnung in einen als geschlossene Schleife ausgebildeten Kanal eingebracht, welcher mit Ein- und Ausgangsöffnungen versehen ist, und die Probe wird mit Hilfe eines elektrischen Feldes entlang einer im wesentlichen geschlossenen Bahn geführt und durch das elektrische Feld in einzelne Komponenten getrennt, wobei das elektrische Feld in dem Kanal durch Elektroden im Bereich der Ein- und Ausgangsöffnungen erzeugt wird, die mit unterschiedlichen Potentialen einer Spannungsquelle verbunden werden. Die erfindungsgemässe Verfahrensführung zeichnet sich insbesondere dadurch aus, dass die Probe in ein elektrolytisches Trägermedium eingebracht wird, welches durch eine der Eingangsöffnungen in den Kanal eingepeist und auf die beiden Richtungen des schleifenförmigen Kanals aufgeteilt wird. Auf diese Weise kann für die zu trennende Probe trotz der begrenzten Abmessungen der Trennvorrichtung praktisch jede beliebige Trennstrecke realisiert werden. Dies wird insbesondere dadurch erreicht, dass das Trägermedium und die Probe, mehrfach, insbesondere zyklisch, durch den Kanal bewegt werden.

Besonders vorteilhaft an der erfindungsgemässen Verfahrensführung ist es, dass die elektrische Potentialdifferenz zur Erzeugung des elektrischen Feldes zum Transport des Trägermediums und der Probe im wesentlichen jeweils nur in einem Teilbereich des Kanals erzeugt wird, insbesondere in demjenigen Teilbereich, in dem sich die Probe befindet, und dass das Feld entsprechend der gewünschten Transportrichtung des Trägermediums und der Probe bzw. der interessierenden Komponente in aufeinanderfolgenden Teilbereichen erzeugt wird. Obwohl die maximal verträgliche elektrische Feldstärke durch das für die Trennvorrichtung verwendete Material begrenzt ist, kann die zu trennende Probe auf diese Weise einer weitaus höheren elektrischen Feldstärke ausgesetzt werden, da sich die Wirkungen des elektrischen Feldes in den Teilbereichen addieren, sodass sich für die Probe in Summe eine weitaus grössere elektrische Feldstärke darbietet, als praktisch in jedem Kanalbereich angelegt worden ist. Im Zuge der zyklischen Bewegung der Probe im geschlossenen Kanal vervielfacht sich die während eines Umlaufes "erlittene" elektrische Feldstärke um die Anzahl der Umläufe.

Vorzugsweise wird die Umschaltfrequenz der elektrischen Potentialdifferenz in den benachbarten Kanalbereich an die Umlaufgeschwindigkeit der interessierenden Komponente im Kanal angepasst.

Insbesondere zum Zweck der Aufkonzentrierung einer interessierenden Komponente werden die Komponenten, die schneller oder langsamer als die Umschaltfrequenz wandern, vorzugsweise durch die entlang des Kanals angeordneten Auslassöffnungen ausgeschieden.

Es ist zweckmässig, wenn das Trägermedium und die Probe bzw. die Komponente in jedem Kanalbereich durch wenigstens zwei Kanalabschnitte bewegt wird, welche jeweils wenigstens eine Ein- und Ausgangsöffnung aufweisen sowie Elektroden umfassen, die im Bereich jeder Oeffnung vorgesehen sind und mit einer Spannungsquelle verbunden werden.

Dabei ist es besonders vorteilhaft, wenn die am Anfangs- und Endpunkt jedes Kanalbereichs vorgesehenen Elektroden zur Erzeugung des elektrischen Feldes jeweils paarweise mit einer Gleichspannungsquelle verbunden werden, während die dazwischenliegende(n) Elektrode(n) physikalisch von der Spannungsquelle getrennt wird (werden). Diese Form der Elektrodenansteuerung ist insbesondere dann von Vorteil, wenn das Trägermedium und die Probe entlang eines als n-Eck ausgebildeten, zusätzlich zu der Einspeiseöffnung für die Probe mit 2n Ein- und Auslassöffnungen versehenen Kanals bewegt werden.

Zweckmässigerweise wird die elektrische Potentialdifferenz erst dann in den benachbarten Kanalbereich weitergeschaltet, nachdem die Probe in den ersten Kanalabschnitt des benachbarten Kanalbereiches bewegt worden ist.

Besonders vorteilhaft wird der Kanal kapillarenartig mit einer Querschnittsfläche von etwa 100 µm² bis etwa 5000 µm² ausgebildet. Dabei wird die Stärke des elektrischen Feldes derart auf die Kanaldimensionen abgestimmt, dass bei einer theoretischen Kanallänge von 1m eine thermische Heizleistung von 1 W nicht überschritten wird.

Vorteilhafterweise wird bei der Ausbildung der Mikrostrukturen in halbleitendem Material, insbesondere in Silizium, die Potentialdifferenz zur Erzeugung des elektrischen Feldes zu etwa 100 V - 500 V gewählt. Auf diese Weise können Durchschläge der Isolatorschicht der Trennvorrichtung vermieden werden. Werden die Mikrostrukturen in Isolator-Material, beispielsweise in Glas ausgebildet, so können Potentialdifferenzen bis zu einigen Kilovolt, beispielsweise bis zu 5 kV, angelegt werden.

Sehr zweckmässig ist es auch, die Probe wenigstens einmal pro Umlauf im Kanal mit Hilfe eines oder mehrerer entlang des Kanals angeordneter Detektoren auf den Zustand der Trennung in die einzelnen Komponenten zu untersuchen.

Im folgenden werden die erfindungsgemässe elektrophoretische Trennvorrichtung und das erfindungsgemässe elektrophoretische Trennverfahren unter Bezugnahme auf die Zeichnungen näher erläutert. Es zeigen in schematischer Darstellung:
- Fig. 1: ein Ausführungsbeispiel der elektrophoretischen Trennvorrichtung,
- Fig. 2: einen Schnitt gemäss Linie A-A in Fig. 1 und
- Fig. 3-8: die Trennvorrichtung nach Fig. 1 in sechs verschiedenen Zuständen zur Erläuterung des erfindungsgemässen elektrophoretischen Trennverfahrens.

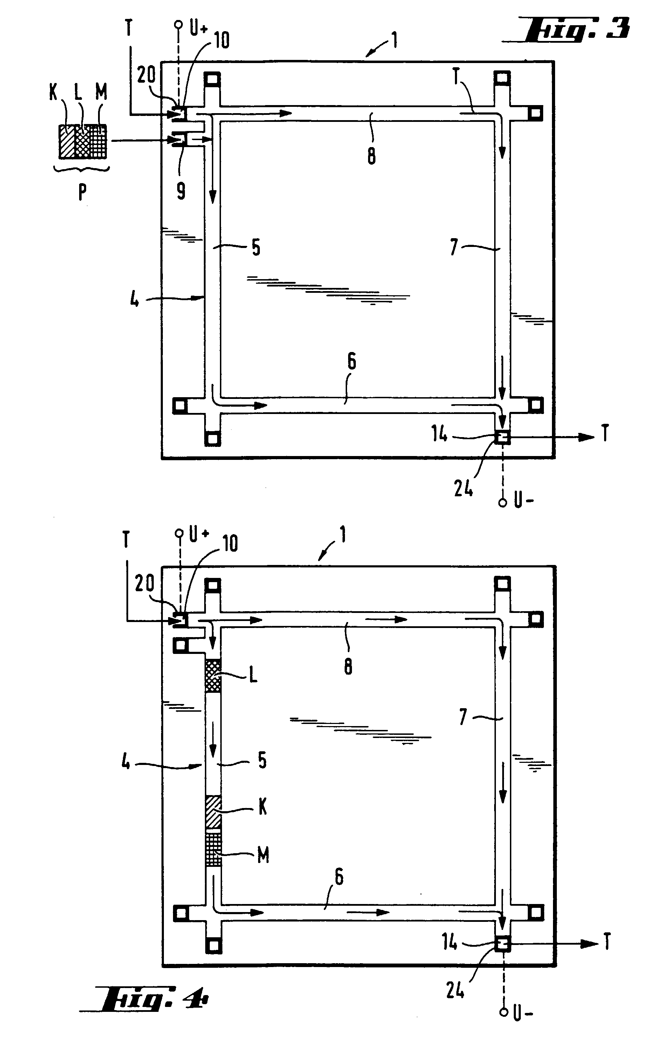

Ein Ausführungsbeispiel der elektrophoretischen Trennvorrichtung ist in den Figuren gesamthaft mit dem Bezugszeichen 1 versehen. Wie aus Fig. 2 ersichtlich ist die Trennvorrichtung beispielsweise zweistückig ausgebildet und umfasst ein Körperteil 2 und ein Deckelteil 3. Insbesondere handelt es sich bei dem dargestellten Ausführungsbeispiel um ein miniaturisiertes Bauteil. Dabei ist das Deckelteil 3 beispielsweise aus Glas gefertigt, während das Körperteil 2 beispielsweise ebenfalls aus Glas oder aus halbleitendem Material, vorzugsweise aus einkristallinem Silizium besteht. Glas oder halbleitende Materialien sind deshalb als Materialien so bevorzugt, weil aus der Halbleiterindustrie grosse Erfahrung in ihrer Bearbeitung mit massenproduktionstechnischen Mitteln besteht. Ihre Bearbeitung kann unter Anwendung modernster aus der Halbleiterfertigung hinlänglich bekannter photolithografischer oder mikromechanischer Mittel erfolgen.

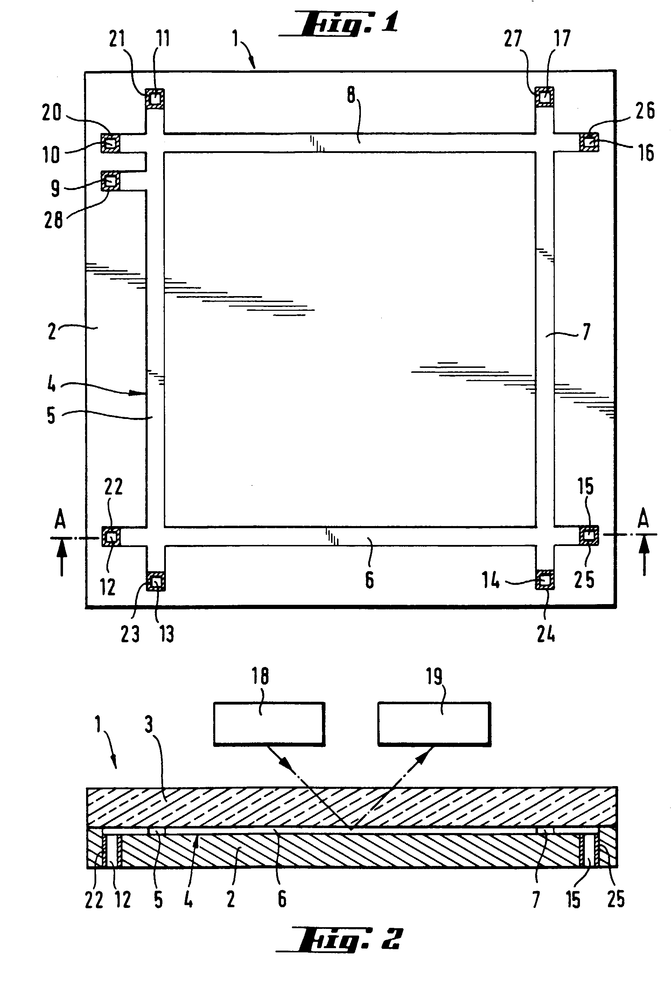

Das Körperteil 2 ist in Fig. 1 dargestellt. Es umfasst einen Kanal 4, der mit Ein- und Auslassöffnungen 10 - 17 für ein Trägermedium ausgestattet ist. Zusätzlich zu den Ein- und Auslassöffnungen 10 - 17 weist der Kanal 4 eine Einspeiseöffnung 9 für eine zu analysierende bzw. zu trennende Probe auf, die als Einstecköffnung für eine nicht dargestellte Anschlusskapillare ausgebildet ist. Diese Anschlusskapillare für die zu untersuchende Probe mündet vorzugsweise in ein aus Gründen der Uebersicht in den Figuren nicht dargestelltes Probenreservoir. Wie ganz klar aus Fig. 1 ersichtlich, ist der Kanal als geschlossene Schleife ausgebildet. In einer bevorzugten Ausbildungsvariante ist der Kanal 4 in n Kanalabschnitte 5 - 8 unterteilt. Dabei ist der Kanal 4 zusätzlich zu der Einspeiseöffnung 9 für die Probe mit vorzugsweise 2n Ein- und Austrittsöffnungen 10 - 17 für das Trägermedium ausgestattet, welche jeweils im Verbindungsbereich der einzelnen Kanalabschnitte 5 - 8 angeordnet sind und allesamt vorzugsweise als Anstecköffnungen für Anschlusskapillaren ausgebildet sind. Diese Anschlusskapillaren münden in Vorrats- oder Auffangbehältnisse für das reine Trägermedium bzw. das mit der Probe oder Komponenten der Probe verunreinigte Trägermedium. Aus Gründen der Uebersichtlichkeit wurden die Vorrats- bzw. Auffangbehältnisse in den Figuren nicht dargestellt. Gemäss dem in den Figuren dargestellten Ausführungsbeispiel der erfindungsgemässen Trennvorrichtung sind die Einspeiseöffnung 9 und die Ein- und Ausgangsöffnungen 10 - 17 als vertikale Durchgangsöffnungen im Körperteil 2 ausgebildet, die beispielsweise auf photolithografische Weise erstellt worden sind. Es versteht sich, dass auch andere Herstellungstechniken anwendbar sind, beispielsweise können die Durchtrittsöffnungen, insbesondere bei anderen Materialien, auch mit Hilfe eines Lasers oder ähnlichem erstellt werden.

Gemäss der Darstellung in Fig. 1 besitzt der als geschlossene Schleife ausgebildete Kanal 4 die Form eines Viereckes, er kann ganz allgemein als n-Eck ausgebildet sein oder auch etwa die Form eines Kreises aufweisen. Im Falle der Ausbildung als allgemeines n-Eck beträgt die Anzahl der Ecken vorzugsweise mindestens drei. Die jeweiligen Seiten des n-Eckes sind durch die Kanalabschnitte 5 - 8 gebildet.

Im Bereich der Ein- und Austrittsöffnungen 10 - 17 Elektroden 20 - 27 vorgesehen, die mit einer nicht dargestellten Spannungsquelle derart verbindbar sind, dass entlang des Kanals 4 ein elektrisches Feld einstellbar ist. In Fig. 1 sind die Elektroden 20 - 27 schraffiert im Bereich der Ein- und Austrittsöffnungen 10 - 17 angedeutet. Eine Elektrode 28 ist im Bereich der Einlassöffnung 9 für die zu trennende Probe angedeutet. Die Elektroden können beispielsweise durch Metallisierung der Innenseiten der Durchtrittsöffnungen erstellt sein und von aussen kontaktierbar sein. Sie können aber auch als vertikal zu dem Kanal 4 im Bereich der Ein- und Austrittsöffnungen 10 - 17 verlaufende Elektroden ausgebildet sein (nicht dargestellt), die mit Kontaktierflächen auf dem Körperteil 2 in Verbindung stehen. Kontaktierdrähte können auf die Kontaktierflächen aufgebracht (gebonded) sein und durch die nach Art beispielsweise eines Speicherchips als Analysechip ausgebildete Trennvorrichtung nach aussen geführt sein. Eine Anordnung der Elektroden in den jeweiligen mit den Ein- und Austrittsöffnungen der Trennvorrichtung verbundenen, vorzugsweise offen ausgebildeten Vorrats- und Auffangbehältnissen für das Trägermedium hilft, eine Blasenbildung im jeweiligen Kanalbereich zu vermeiden.

Besonders vorteilhaft ist es, wenn jedem Kanalabschnitt 5 - 8 Elektroden 20 - 27 zugeordnet sind, welche mit der nicht dargestellten Spannungsquelle derart verbindbar sind, dass das elektrische Feld jeweils entlang des Kanalbereichs anlegbar ist, der zwischen den betreffenden, mit unterschiedlichen elektrischen Potentialen beaufschlagten Elektroden angeordnet ist. Auf diese Weise ausgebildet, kann die zu trennende Probe einem weitaus grösseren elektrischen Feld ausgesetzt werden. Die für das verwendete Material verträgliche Potentialdifferenz wird jeweils nur in einem Teilbereich des Kanals 4 angelegt. Die gesamte entlang eines Umlaufes auf die zu trennende Probe wirkende elektrische Feldstärke entspricht der Summe der in den Teilbereichen jeweils auf die Probe einwirkenden Feldstärken. Die Gesamtfeldstärke, der eine zu trennende Probe ausgesetzt ist entspricht wiederum der Feldstärke bei einem Umlauf multiplitiert mit der Anzahl der Umläuf im geschlossenen Kanal, sodass die resultierende Feldstärke ein Vielfaches der im jeweiligen Teilbereich des Kanals wirkenden Feldstärke beträgt. Dabei ist es zweckmässig, jeweils wenigstens zwei, vorzugsweise drei, Kanalabschnitte zu einem Kanalbereich zudammenzufassen. Das elektrische Feld ist dann jeweils in einem gesamten Kanalbereich wirksam. Dabei sind die zu Beginn und am Ende des jeweiligen Kanalbereiches angeordneten Quellelektroden mit den Potentialklemmen der Spannungsquelle verbunden. Die im Verbindungsbereich der Kanalabschnitte angeordneten Elektroden weisen in diesem Fall ein Potential auf, welches zwischen den Potentialen der Quellelektroden des Kanalbereiches liegt.

Vorzugsweise sind die Elektroden an den Verbindungsbereichen der Kanalabschnitte eines mit dem elektrischen Feld beaufschlagten Kanalbereiches physikalisch von der Spannungsquelle getrennt, sodass sie sich frei floatend auf ein beliebiges Potential zwischen den Potentialen der jeweiligen beiden Quellelektroden einstellen können. Diese Ausbildungsvariante ist insbesondere bei der Verwendung einer Gleichspannungsqelle, mit der die Elektroden über ein Relais verbunden sind, von Vorteil. Durch das jeweils paarweise Verbinden der Quellelektroden eines Kanalbereiches mit den Potentialklemmen der Gleichspannungsquelle entsteht ein entlang der einzelnen Kanalbereiche zyklisch wanderndes Feld. Anstelle einer Gleichspannungsquelle können die Elektroden auch mit Wechselspannungsquellen verbunden sein. Je nach gewünschter Umlaufrichtung der Probe im Kanal müssen die Wechselspannungen, die an den entlang des Kanals 4 aufeinander folgenden Elektroden 20 - 27 anliegen, entsprechend phasenverschoben sein. Die Frequenz der Wechselspannungen richtet sich dabei nach der interessierenden Komponente, die ja bis zuletzt im Kanal 4 verbleiben soll.

Der Kanal 4 der elektrophoretischen Trennvorrichtung 1 ist vorzugsweise kapillarenartig ausgebildet. Die Erstellung des Kanals 4 erfolgt dabei üblicherweise unter Anwendung photolithographischer oder mikromechanischer Bearbeitungstechniken. Dabei entsteht im Körperteil 2 ein Graben, dessen Querschnittsform stark von der gewählten Erstellungstechnik, beispielsweise nasschemisches Aetzen, Plasmaätzen oder isotropes Aetzen, abhängt. Die offene Seite des den Kanal 4 bildenden Grabens wird durch das Deckelteil 3 abgedeckt. Zweckmässigerweise besitzt der Kanal 4 eine Querschnittsfläche von etwa 100 µm² bis etwa 5000 µm².

Für den Einsatz der erfindungsgemässen elektrophoretischen Trennvorrichtung 1 zu Analysezwecken ist es besonders vorteilhaft, wenn sie wenigstens einen Detektor 18,19, beispielsweise einen Absorptionsdetektor für ultraviolette Strahlung oder für das sichtbare Spektrum oder einen Lumineszenzdetektor oder einen elektrochemischen Detektor umfasst, der entlang des Kanals angeordnet ist. Gemäss der Darstellung in Fig. 2 ist der Detektor beispielsweise als Absorptionsdetektor ausgebildet und umfasst eine Lichtquelle 18 und eine photosensitive Detektorzelle 19, die beide oberhalb des transparenten Glas-Deckelteils 3 angeordnet sind. Der Detektor kann aber auch auf dem Körperteil 2 integriert sein und in einem Teilbereich des Kanals 4 angeordnet sein. Insbesondere die Ausbildung des Körperteils 2 in halbleitendem Material, beispielsweise in einkristallinem Silizium, und die Anwendung von aus der Halbleiterindustrie bekannten Fertigungstechniken erlauben die Integration von elektronischen Detektorelementen direkt auf dem Siliziumplättchen. Auf diese Weise entsteht ein Analysechip, welcher sowohl "mechanische" Elemente, wie Kanäle und Verzweigungen oder Anschlussöffnungen aufweist, alsauch mit elektronischen Schaltungen ausgestattet sein kann. Die Fläche des Analysechips beträgt vorzugsweise etwa 20 mm² bis etwa 500 mm².

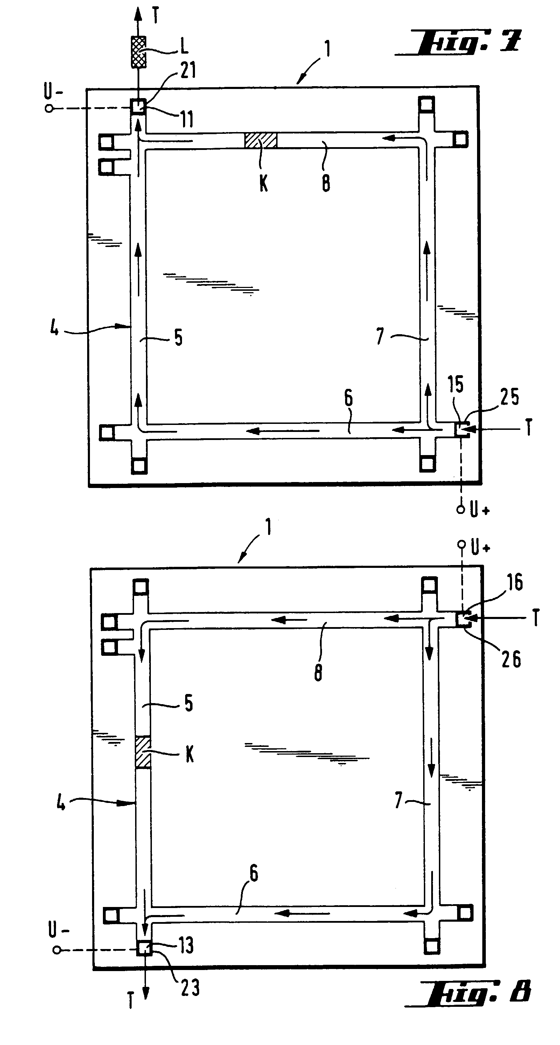

Im folgenden wird das erfindungsgemässe elektrophoretische Trennverfahren anhand der Fig. 3 - 8 näher eräutert. Die Bauteile und Elemente der elektrophoretischen Trennvorrichtung 1 sind dabei mit denselben Bezugszeichen versehen wie in den Fig. 1 und 2. Ein Trägermedium T, üblicherweise ein Elektrolyt, wird, wie in Fig. 3 dargestellt, beispielsweise über die Einlassöffnung 10 in den als geschlossene Schleife ausgebildeten Kanal 4 eingebracht. Dies erfolgt beispielsweise über Anschlusskapillaren, die in ein Vorratsbehältnis für das Trägermedium münden. Der Transport kann über Mikropumpen erfolgen, es können aber auch elektrische Felder für den Transport eingesetzt werden. Dabei ist zu berücksichtigen, dass das Trägermedium im allgemeinen vom positiveren zum negativeren Potential transportiert wird.

In der in Fig. 3 dargestellten ersten Stufe des erfindungsgemässen elektrophoretischen Trennverfahrens ist beispielsweise die Potentialdifferenz einer Gleichspannungsquelle zwischen der Elektroden 20 an der Einlassöffnung 10 und der Elektrode 24 an der Auslassöffnung 14 angelegt worden. Die Elektroden an den Verbindungsbereichen der Kanalabschnitte 5 und 6 sind beispielsweise nicht mit der Spannungsquelle verbunden und können sich auf ein Potential einstellen, welches zwischen den Potentialen der mit den Potentialklemmen der Spannungsquelle verbundenen Quellelektroden 10 und 14 liegt. Daraus resultiert ein elektrisches Feld, welches sich sowohl über den von den Kanalabschnitten 5 und 6, als auch über den von den Kanalabschnitten 7 und 8 gebildeten Kanalbereich erstreckt. Das Trägermedium wird jeweils von der Einlassöffnung 10 zu der Auslassöffnung 14 transportiert. Die Auslassöffnung ist beispielsweise über eine Anschlusskapillare mit einem Auffangbehältnis für das Trägermedium T verbunden.

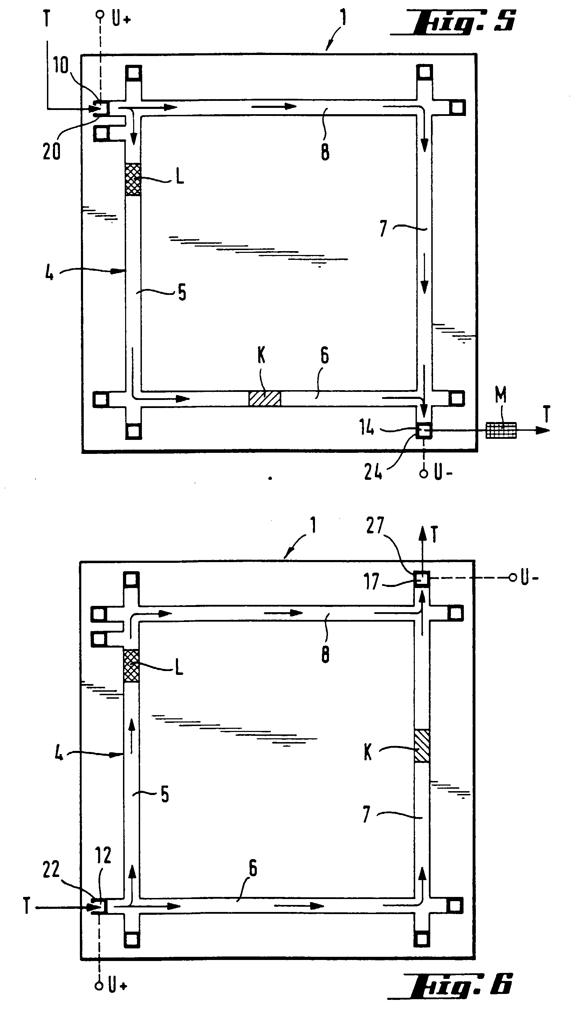

Ueber die Einlassöffnung 9 wird eine Probe P eingespeist, die im dargestellten Beispiel die Komponenten K, L und M umfasst. Enlang ihres Transportweges werden die Komponenten K, L und M entsprechend ihrer Wanderungsgeschwindigkeiten im angelegten elektrischen Feld getrennt. Dies ist in den Fig. 4 und 5 dargestellt. Die Komponente M, die die höchste Wanderungsgeschwindigkeit im elektrischen Feld aufweist, wird schliesslich zusammen mit dem Trägermedium T durch die Auslassöffnung 14 ausgeschieden, sodass nur noch die Komponenten K und L im Kanal verbleiben. Die Komponente M wird zusammen mit dem Trägermedium T einem Auffangbehältnis zugeführt.

Bevor die interessierende Komponente K ebenfalls durch die Auslassöffnung 14 ausgeschieden wird, wird die elektrische Potentialdifferenz auf die den nächsten Kanalbereich 6,7 begrenzenden Elektroden 22 und 27 weitergeschaltet. Gemäss Fig. 6 sind die Quellelktroden 22 und 27 an den Enden des Kanalbereiches im Bereich der Ein- bzw. Auslassöffnungen 12 bzw. 17 angeordnet. Dabei ist die Einlassöffnung 12 mit einem Vorratsbehältnis für das Trägermedium T verbunden, sodass laufend frisches Trägermedium nachgeliefert werden kann, die Auslassöffnung 27 ist mit einem Auffangbehältnis verbunden. Die Polarität des elektrischen Feldes im Kanal 4 wird derart gewählt, dass die interessierende Komponente K in den Kanalabschnitt 7 weitertransportiert wird, während die Komponente L im Kanalabschnitt 5 zurück zur Auslassöffnung 21 transportiert wird.

Kurz bevor die interessierende Komponente K durch die Auslassöffnung 17 ausgeschieden wird, wird die Potentialdifferenz auf die den nächsten Kanalabschnitt 7,8 begrenzenden Elektroden 25 und 21 weitergeschaltet. Dadurch wird die Komponente K im Kanalabschnitt 8 weiterbewegt, während die Komponente L zusammen mit der Trägerflüssigkeit T durch die Auslassöffnung 11 in ain Auffangbehältnis ausgeschieden wird.

Durch erneutes Umschalten der Potentialdifferenz auf die den folgenden Kanalbereich 8,5 begrenzenden Elektroden 26 und 23 wird die interessierende Komponente K in den Kanalabschnitt 5 bewegt.

Es versteht sich, dass die Trennung der Probe P in ihre Komponenten K, L und M im allgemeinen nicht bereits nach einem Umlauf erfolgt ist. Ueblicherweise sind viele Umläufe erforderlich, um eine derartige Trennung durchzuführen. Dadurch, dass der Kanal 4 als geschlossene Schleife ausgebildet ist, sind praktisch beliebig lange Trennstrecken realisierbar, da die Probe zyklisch durch den Kanal bewegt werden kann. Eine Begrenzung der möglichen Trennlängen ist nur durch das Diffusionsverhalten der jeweiligen Probe im jeweiligen Trägermedium gegeben. Die Umschaltfrequenz der Potentialdifferenz auf die Elektroden in den jeweiligen benachbarten Kanalbereichen ist dabei vorzugsweise auf die Umlaufgeschwindigkeit der interessierenden Komponente K der Probe P abgestimmt. Sie ergibt sich im allgemeinen aus der für einen Umlauf der Komponente benötigten Zeit geteilt durch die Anzahl der Kanalbereiche. Auf diese Weise werden alle Komponenten, die langsamer oder schneller als die Umschaltfrequenz wandern, vorzugsweise durch die entlang des Kanals 4 angeordneten Auslassöffnungen ausgeschieden.

Dadurch, dass die elektrische Potentialdifferenz immer nur an einen Teilbereich des Kanals 4 angelegt wird, durch den die Probe durchbewegt wird, und dass sich die Wirkungen des durch die Potentialdifferenz verursachten elektrischen Feldes in jedem Teilbereich und bei jedem Umlauf addieren, wird die Probe insgesamt einem Vielfachen des elektrischen Feldes ausgesetzt als eigentlich der Potentialdifferenz im jeweiligen Kanalbereich entspricht. Obwohl die maximal verträgliche Potentialdifferenz bzw. das daraus resultierende elektrische Feld durch das für die elektrophoretische Trennvorrichtung verwendete Material begrenzt ist, kann auf diese Weise die Trennleistung deutlich gesteigert werden. Die Stärke des elektrischen Feldes ist auf die Kanaldimensionen abgestimmt. Insbesondere wird darauf geachtet, dass bei einer theoretischen Kanallänge von 1 m eine thermische Heizleistung von 1 W im Kanal nicht überschritten wird. Vorteilhafterweise werden bei Körperteilen aus halbleitendem Silizium dazu Potentialdifferenzen von etwa 100 V bis etwa 500 V gewählt. Auf diese Weise können elektrische Durchschläge der Isolatorschicht der Trennvorrichtung vermieden werden. Sind die Körperteile aus isolatormaterial, beispielsweise aus Glas, so können Potentialdifferenzen bis zu einigen Kilovolt, beispielsweise bis zu 5 kV, angelegt werden, ohne elektrische Durchschläge zu produzieren.

Besonders zweckmässig und effizient ist eine Trennung durchführbar, wenn die Probe bzw. die mehr oder weniger getrennten Komponenten wenigstens einmal pro Umlauf an einem oder an mehreren entlang des Kanals 4 verteilten Detektoren vorbeibewegt werden. Auf diese Weise kann der Trennungsgrad der Probe bzw. der Grad der Aufkonzentrierung einer Komponente der Probe gut überwacht werden. Ueberdies ist auf diese Weise das Trennverfahren auch einfach automatisierbar.

Durch die erfindungsgemässe elektrophoretische Trennvorrichtung und das erfindungsgemässe elektrophoretische Verfahren werden die Nachteile des Standes der Technik behoben. Es sind sehr hohe Trennleistungen erzielbar. Durch die Möglichkeit, die zu trennende Probe in Summe sehr hohen elektrischen Feldstärken auszusetzen, wird die für die Trennung in die einzelnen Komponenten erforderliche Zeit deutlich verkürzt. So beträgt die Zeit für einen Umlauf im Kanal je nach zu trennender Probe beispielsweise nur etwa 2 - 10 Sekunden. Bei einer angenommenen Wanderungsgeschwindigkeit der interessierenden Komponente in der Probe von etwa 2,5 - 5 mm/s und einer Kanallänge je Umlauf von etwa 8 - 40 mm ergeben sich in einer Trennzeit von etwa 1 - 30 Minuten Trennleistungen in der Grössenordnung von 100'000 bis zu 1'000'000 Trennstufen (theoretical plates) und mehr. Die erfindungsgemässe Trennvorrichtung ist mit massenproduktionstechnischen Mitteln, insbesondere mit aus der Halbleiterindustrie bekannten Fertigungstechniken, kostengünstig und reproduzierbar in hohen Stückzahlen herstellbar.

## Patentansprüche

1. Elektrophoretische Trennvorrichtung für Zonenkapillarelektrophorese mit einem Kanal (4), welcher als geschlossene Schleife ausgebildet ist, welcher mit Ein- und Ausgangsöffnungen ausgestattet ist und welcher wenigstens eine Einspeiseöffnung (9) für eine zu untersuchende Probe (P) aufweist, ferner mit Elektroden im Bereich der Ein- und Ausgangsöffnungen, von welchen im Betriebszustand jeweils mindestens zwei mit einer Spannungsquelle derart verbunden sind, dass entlang des Kanals (4) ein elektrisches Feld einstellbar ist, dadurch gekennzeichnet, dass die Ein- und Ausgangsöffnungen sowie die Elektroden relativ zu dem Kanal (4) derart angeordnet sind, dass sich ein durch eine der Eingangsöffnungen eingespeistes Trägermedium (T) in beide Richtungen des schleifenförmigen Kanals (4) aufteilt.

2. Vorrichtung nach Anspruch 1, dadurch gekennzeichnet, dass der Kanal (4) in n Kanalabschnitte (5 - 8) unterteilt ist und zusätzlich zu der Einspeiseöffnung (9) für die Probe (P) 2n Ein- und Ausgangsöffnungen (10 - 17) aufweist, die im Verbindungsbereich der Kanalabschnitte angeordnet sind.

3. Vorrichtung nach Anspruch 2, dadurch gekennzeichnet, dass jedem Kanalabschnitt (5 - 8) Elektroden (20 - 27) zugeordnet sind, welche im Betriebszustand derart mit der Spannungsquelle verbunden sind, dass das elektrische Feld im wesentlichen jeweils entlang eines Kanalbereichs herrscht, der zwischen den betreffenden, mit unterschiedlichen elektrischen Potentialen beaufschlagten Elektroden angeordnet ist.

4. Vorrichtung nach Anspruch 3, dadurch gekennzeichnet, dass der mit dem elektrischen Feld beaufschlagte Kanalbereich wenigstens zwei Kanalabschnitte umfasst, deren Verbindungsbereich eine Elektrode zugeordnet ist, die ein Potential aufweist, welches zwischen den Potentialen der felderzeugenden Elektroden des elektrischen Feldes liegt.

5. Vorrichtung nach Anspruch 4, dadurch gekennzeichnet, dass die Spannungsquelle eine vorzugsweise regelbare Gleichspannungsquelle ist.

6. Vorrichtung nach Anspruch 5, dadurch gekennzeichnet, dass die Elektroden (20 - 27), vorzugsweise mit Hilfe eines Relais, jeweils paarweise derart mit der Spannungsquelle verbunden sind, dass sie ein entlang der einzelnen Kanalbereiche zyklisch wanderndes elektrisches Feld erzeugen.

7. Vorrichtung nach einem der Ansprüche 2 - 6, dadurch gekennzeichnet, dass der Kanal (4) als n-Eck ausgebildet ist, dessen Seiten durch die Kanalabschnitte (5 - 8) gebildet sind.

8. Vorrichtung nach einem der Ansprüche 2 - 7, dadurch gekennzeichnet, dass der Kanal (4) wenigstens drei Kanalabschnitte umfasst.

9. Vorrichtung nach einem der vorangehenden Ansprüche, dadurch gekennzeichnet, dass sie als miniaturisiertes Bauteil (1) ausgebildet ist, welches vorzugsweise zweiteilig ausgebildet ist und ein Körperteil (2) und ein Deckelteil (3), vorzugsweise aus Glas, umfasst, wobei der Kanal (4), die Ein- und Ausgangsöffnungen (10 -17) sowie die Einspeiseöffnung (9) vorzugsweise am Körperteil (2) vorgesehen sind.

10. Vorrichtung nach Anspruch 9, dadurch gekennzeichnet, dass das Körperteil (2) ein mikromechanisch oder photolithographisch bearbeitetes Glasplättchen ist.

11. Vorrichtung nach Anspruch 9, dadurch gekennzeichnet, dass das Körperteil (2) ein vorzugsweise photolithographisch oder mikromechanisch bearbeitetes Plättchen aus halbleitendem Material, vorzugsweise ein Siliziumplättchen, ist.

12. Vorrichtung nach einem der vorangehenden Ansprüche, dadurch gekennzeichnet, dass sie wenigstens einen Detektor (18, 19) umfasst, beispielsweise einen Absorptionsdetektor für ultraviolette Strahlung oder für das sichtbare Spektrum oder einen Lumineszenzdetektor oder einen elektrochemischen Detektor, der entlang des Kanals (4) angeordnet ist.

13. Vorrichtung nach einem der vorangehenden Ansprüche, dadurch gekennzeichnet, dass der Kanal (4) eine Querschnittsfläche von etwa 100 µm² bis etwa 5000 µm² aufweist.

14. Trennverfahren mittels Zonenkapillarelektrophorese, bei dem eine Probe (P) über eine Einspeiseöffnung (9) in einen als geschlossene Schleife ausgebildeten Kanal (4) eingebracht wird, welcher mit Ein- und Ausgangsöffnungen versehen ist, und bei dem die Probe (P) mit Hilfe eines elektrischen Feldes entlang einer im wesentlichen geschlossenen Bahn geführt und durch das elektrische Feld in einzelne Komponenten (K, L und M) getrennt wird, wobei das elektrische Feld in dem Kanal (4) durch Elektroden (20 - 27) im Bereich der Ein- und Ausgangsöffnungen (10 - 17) erzeugt wird, die mit unterschiedlichen Potentialen einer Spannungsquelle verbunden werden, dadurch gekennzeichnet, dass die Probe in ein elektrolytisches Trägermedium (T) eingebracht wird, welches durch eine der Eingangsöffnungen in den Kanal (4) eingepeist und auf die beiden Richtungen des schleifenförmigen Kanals (4) aufgeteilt wird.

15. Verfahren nach Anspruch 14, dadurch gekennzeichnet, dass das Trägermedium (T) und die Probe (P) mehrfach, insbesondere zyklisch, durch den Kanal (4) bewegt werden.

16. Verfahren nach Anspruch 14 oder 15, dadurch gekennzeichnet, dass die elektrische Potentialdifferenz zur Erzeugung des elektrischen Feldes zum Transport des Trägermediums (T) und der Probe (P) im wesentlichen jeweils in demjenigen Teilbereich des Kanals (4)erzeugt wird, in dem sich die Probe (P) befindet, und dass das Feld entsprechend der gewünschten Transportrichtung des Trägermediums (T) und der Probe (P) bzw. der interessierenden Komponente (K) in aufeinanderfolgenden Teilbereichen erzeugt wird.

17. Verfahren nach Anspruch 16, dadurch gekennzeichnet, dass die Umschaltfrequenz der elektrischen Potentialdifferenz in die benachbarten Kanalbereiche an die Umlaufgeschwindigkeit der interessierenden Komponente (K) im Kanal (4) angepasst wird.

18. Verfahren nach Anspruch 17, dadurch gekennzeichnet, dass die Komponenten (L, M), die schneller oder langsamer als die Umschaltfrequenz wandern, durch die entlang des Kanals (4) angeordneten Ausgangsöffnungen ausgeschieden werden.

19. Verfahren nach einem der Ansprüche 17 oder 18, dadurch gekennzeichnet, dass das Trägermedium (T) und die Probe (P) bzw. die interessierende Komponente (K) in jedem Kanalbereich durch wenigstens zwei Kanalabschnitte bewegt werden, welche jeweils wenigstens eine Ein- und Ausgangsöffnung aufweisen sowie Elektroden umfassen, die im Bereich jeder Öffnung vorgesehen sind und mit einer Spannungsquelle verbunden werden.

20. Verfahren nach Anspruch 19, dadurch gekennzeichnet, dass die am Anfangs- und Endpunkt jedes Kanalbereichs vorgesehenen Elektroden zur Erzeugung des elektrischen Feldes jeweils paarweise mit einer Gleichspannungsquelle verbunden werden und dass die dazwischenliegende(n) Elektrode(n) physikalisch von der Spannungsquelle getrennt wird (werden).

21. Verfahren nach einem der Ansprüche 14 - 20, dadurch gekennzeichnet, dass das Trägermedium und die Probe (P) entlang eines als n-Eck ausgebildeten, zusätzlich zu der Einspeiseöffnung (9) für die Probe mit 2n Ein- und Auslassöffnungen (10 - 17) versehenen Kanals (4) bewegt werden.

22. Verfahren nach Anspruch 21, dadurch gekennzeichnet, dass die elektrische Potentialdifferenz erst dann in den benachbarten Kanalbereich weitergeschaltet wird, nachdem die Probe in den ersten Kanalabschnitt des benachbarten Kanalbereiches bewegt worden ist.

23. Verfahren nach einem der Ansprüche 14 - 22, dadurch gekennzeichnet, dass der Kanal kapillarenartig und mit einer Querschnittsfläche von etwa 100 µm² bis etwa 5000 µm² ausgebildet wird, und dass die Stärke des elektrischen Feldes derart auf die Kanaldimensionen abgestimmt wird, dass bei einer theoretischen Kanallänge von 1m eine thermische Heizleistung von 1 W nicht überschritten wird.

24. Verfahren nach Anspruch 23, dadurch gekennzeichnet, dass die Potentialdifferenz zur Erzeugung des elektrischen Feldes von etwa 100 V bis zu einigen Kilovolt, bei halbleitenden Materialien vorzugsweise bis zu etwa 500 V gewählt wird.

25. Verfahren nach einem der Ansprüche 14 - 24, dadurch gekennnzeichnet, dass die Probe (P) wenigstens einmal pro Umlauf im Kanal (4) mit Hilfe eines oder mehrerer entlang des Kanals (4) angeordneter Detektoren (18, 19) auf den Zustand der Trennung in die einzelnen Komponenten (K, L und M) untersucht wird.

## Claims

1. An electrophoretic separating device for zone capillary electrophoresis, having a channel (4) which is constructed in the form of a closed loop, which is provided with inlet and outlet openings and which has at least one feed opening (9) for a sample (P) to be investigated, and having electrodes in the region of the inlet and outlet openings, at least two of which electrodes, in the operating state, are connected to a voltage source in such a manner that an electric field can be established along the channel (4), wherein the inlet and outlet openings and the electrodes are so arranged relative to the channel (4) that a carrier medium (T) fed in through one of the inlet openings divides itself into both directions of the loop-shaped channel (4).

2. A device according to claim 1, wherein the channel (4) is divided into **n** channel sections (5 - 8) and has, in addition to the feed opening (9) for the sample (P), 2**n** inlet and outlet openings (10 - 17) that are arranged in the region of the connections between the channel sections.

3. A device according to claim 2, wherein each channel section (5 - 8) is associated with electrodes (20 - 27) which, in the operating state, are connected to the voltage source in such a manner that the electric field is applied substantially along a channel region that is arranged between the relevant electrodes, which electrodes have different electrical potentials.

4. A device according to claim 3, wherein the channel region along which the electric field is applied comprises at least two channel sections the connection region of which is associated with an electrode having a potential lying between the potentials of the source electrodes of the electric field.

5. A device according to claim 4, wherein the voltage source is a DC voltage source, preferably a controllable DC voltage source.

6. A device according to claim 5, wherein the electrodes (20 - 27) are connected to the voltage source in pairs, preferably with the aid of a relay, so as to generate an electric field that migrates cyclically along the individual channel regions.

7. A device according to any one of claims 2 to 6, wherein the channel (4) is constructed in the form of an **n**-sided figure the sides of which are formed by the channel sections (5 - 8).

8. A device according to any one of claims 2 to 7, wherein the channel (4) comprises at least three channel sections.

9. A device according to any one of the preceding claims, which is constructed in the form of a miniaturised component (1) which is preferably of two-part construction and comprises a body part (2) and a lid part (3), preferably of glass, with the channel (4), the inlet and outlet openings (10 - 17) and the feed opening (9) preferably being provided on the body part (2).

10. A device according to claim 9, wherein the body part (2) is a micromechanically or photolithographically machined glass plate.

11. A device according to claim 9, wherein the body part (2) is a preferably photolithographically or micromechanically machined plate of semiconducting material, preferably a silicon plate.

12. A device according to any one of the preceding claims, which comprises at least one detector (18, 19), for example an absorption detector for ultraviolet radiation or for the visible spectrum, or a luminescence detector or an electrochemical detector, which is arranged along the channel (4).

13. A device according to any one of the preceding claims, wherein the channel (4) has a cross-sectional surface area of from approximately 100 µm² to approximately 5000 µm².

14. A separating method using zone capillary electrophoresis, wherein a sample (P) is introduced *via* a feed opening (9) into a channel (4) which is constructed in the form of a closed loop, which channel is provided with inlet and outlet openings, and wherein the sample (P) is moved with the aid of an electric field along a substantially closed path and is separated into individual components (K, L and M) by the electric field, the electric field being generated in the channel (4) by electrodes (20 - 27) in the region of the inlet and outlet openings (10 - 17), which electrodes are connected to different potentials of a voltage source, which method comprises introducing the sample into an electrolytic carrier medium (T) which is fed into the channel (4) through one of the inlet openings and is divided into the two directions of the loop-shaped channel (4).

15. A method according to claim 14, wherein the carrier medium (T) and the sample (P) are moved repeatedly, especially cyclically, through the channel (4).

16. A method according to claim 14 or 15, wherein the electrical potential difference for generating the electric field for transporting the carrier medium (T) and the sample (P) is generated essentially in that portion of the channel (4) in which the sample (P) is located, and the field is generated in successive portions in accordance with the desired transport direction of the carrier medium (T) and of the sample (P) or the component (K) of interest.

17. A method according to claim 16, wherein the switching frequency of the electrical potential difference to the adjacent channel regions is matched to the circulation speed of the component (K) of interest in the channel (4).

18. A method according to claim 17, wherein the components (L, M) that migrate more quickly or more slowly than the switching frequency are discharged through the outlet openings arranged along the channel (4).

19. A method according to either claim 17 or claim 18, wherein the carrier medium (T) and the sample (P) or the component (K) of interest in each channel region are moved through at least two channel sections which each comprise at least one inlet and outlet opening and also comprise electrodes which are provided in the region of each opening and are connected to a voltage source.

20. A method according to claim 19, wherein the electrodes provided at the beginning and end points of each channel region for generating the electric field are connected in pairs to a DC voltage source and the electrode(s) located therebetween is(are) physically separated from the voltage source.

21. A method according to any one of claims 14 to 20, wherein the carrier medium and the sample (P) are moved along a channel (4) that is constructed in the form of an **n**-sided figure and that is provided with 2**n** inlet and outlet openings (10 - 17) in addition to the feed opening (9) for the sample.

22. A method according to claim 21, wherein the electrical potential difference is switched on to the adjacent channel region only after the sample has been moved into the first channel section of the adjacent channel region.

23. A method according to any one of claims 14 to 22, wherein the channel is constructed in the manner of a capillary and with a cross-sectional surface area of from approximately 100 µm² to approximately 5000 µm², and the strength of the electric field is matched to the dimensions of the channel in such a manner that at a theoretical channel length of 1 m, the thermal heat output does not exceed 1 W.

24. A method according to claim 23, wherein the potential difference selected for generating the electric field is from approximately 100 V to several kilovolts, in the case of a semiconducting material preferably up to about 500 V.

25. A method according to any one of claims 14 to 24, wherein the state of separation of the sample (P) into the individual components (K, L and M) is examined at least once per circuit in the channel (4) with the aid of one or more detectors (18, 19) arranged along the channel (4).

## Revendications

1. Appareil de séparation par électrophorèse pour électrophorèse capillaire par zones, comportant un canal (4) qui est conçu sous forme de boucle fermée, qui est équipé d'ouvertures d'entrée et de sortie et qui présente au moins une ouverture d'introduction (9) pour un échantillon (P) à étudier, comportant en outre, dans la zone des ouvertures d'entrée et de sortie, des électrodes dont, à l'état de fonctionnement, au moins deux sont chacune reliées à une source de tension de façon qu'un champ électrique puisse être prescrit le long du canal (4), caractérisé par le fait que les ouvertures d'entrée et de sortie ainsi que les électrodes sont disposées, par rapport au canal (4), de façon qu'un fluide porteur (T), introduit par l'une des ouvertures d'entrée, se répartisse dans les deux directions du canal (4) en forme de boucle.

2. Appareil selon la revendication 1, caractérisé par le fait que le canal (4) se divise en n portions de canal (5-8) et qu'en plus de l'ouverture d'introduction (9) pour l'échantillon (P), il présente 2n ouvertures d'entrée et de sortie (10-17) qui sont disposées dans la zone de liaison des portions du canal.

3. Appareil selon la revendication 2, caractérisé par le fait qu'à chaque portion (5-8) du canal correspondent des électrodes (20-27) qui, à l'état de fonctionnement, sont reliées à la source de tension de façon telle que le champ électrique règne essentiellement chaque fois le long d'une zone du canal qui est disposée entre les électrodes en question, soumises à des potentiels électriques différents.

4. Appareil selon la revendication 3, caractérisé par le fait que la zone du canal soumise au champ électrique comporte au moins deux portions de canal à la zone de liaison desquelles correspond une électrode qui présente un potentiel qui se situe entre les potentiels des électrodes du champ électrique qui créent le champ.

5. Appareil selon la revendication 4, caractérisé par le fait que la source de tension est de préférence une source de tension continue réglable.

6. Appareil selon la revendication , caractérisé par le fait que les électrodes (20-27) sont, chacune par paire, reliées, de préférence à l'aide d'un relais, à la source de tension de façon telle qu'elles créent un champ électrique qui migre cycliquement le long des différentes zones du canal.

7. Appareil selon l'une des revendications 2-6, caractérisé par le fait que le canal (4) a la forme d'un polygone à n côtés dont les côtés sont formés par les portions (5-8) du canal.

8. Appareil selon l'une des revendications 2-7, caractérisé par le fait que le canal (4) comporte au moins trois portions de canal.

9. Appareil selon l'une des revendications précédentes, caractérisé par le fait qu'il est conçu sous forme d'un composant miniaturisé (1) qui est de préférence formé en deux parties et comporte une partie corps (2) et une partie couvercle (3), de préférence en verre, le canal (4), les ouvertures d'entrée et de sortie (10-17) ainsi que l'ouverture d'introduction (9) étant de préférence prévues sur la partie corps (2).

10. Appareil selon la revendication 9, caractérisé par le fait que la partie corps (2) est une plaquette de verre usinée par voie micromécanique ou photolithographique.

11. Appareil selon la revendication 9, caractérisé par le fait que la partie corps (2) est une plaquette, de préférence usinée par voie photolithographique ou micromécanique, en matériau semiconducteur, de préférence une plaquette de silicium.

12. Appareil selon l'une des revendications précédentes, caractérisé par le fait qu'il comporte au moins un détecteur (18, 19), par exemple un détecteur d'absorption pour rayonnement ultraviolet ou pour le spectre visible ou un détecteur de luminescence ou un détecteur électrochimique qui est disposé le long du canal (4).

13. Appareil selon l'une des revendications précédentes, caractérisé par le fait que le canal (4) présente une surface de section d'environ 100 µm² à environ 500 µm².

14. Procédé de séparation par électrophorèse capillaire par zones, dans le cas duquel on introduit, par une ouverture d'introduction (9), un échantillon (P) dans un canal (4) qui est conçu sous forme de boucle fermée et qui est muni d'ouvertures d'entrée et de sortie et dans le cas duquel l'échantillon (P) est guidé, à l'aide d'un champ électrique, le long d'un parcours essentiellement fermé et est séparé par le champ électrique en différents composants (K, L et M), le champ électrique étant produit dans le canal (4) par des électrodes (20-27) qui sont situées (10-17) dans la zone des ouvertures d'entrée et de sortie (10-17) et sont reliées aux différents potentiels d'une source de tension, caractérisé par le fait que l'échantillon se présente dans un fluide électrolytique porteur (T) qui est introduit dans le canal (4) par l'une des ouvertures d'entrée et se répartit sur les deux directions du canal en forme de boucle (4).

15. Procédé selon la revendication 14, caractérisé par le fait que le fluide porteur (T) et l'échantillon (P) se meuvent plusieurs fois, en particulier cycliquement, le long du canal (4).

16. Procédé selon la revendication 14 ou 15, caractérisé par le fait que la différence de potentiel électrique pour la création du champ électrique pour le transport du fluide porteur (T) et de l'échantillon (P) est essentiellement chaque fois créée dans la zone partielle du canal (4) dans laquelle se trouve l'échantillon (P) et que le champ est créé dans les zones partielles successives en fonction du sens du transport désiré du fluide porteur (T) et de l'échantillon (P) ou des composants intéressants (K).

17. Procédé selon la revendication 16, caractérisé par le fait que la fréquence de commutation de la différence de potentiel électrique dans les zones du canal voisines est adaptée à la vitesse de circulation du composant intéressant (K) dans le canal (4).

18. Procédé selon la revendication 17, caractérisé par le fait que les composants (L, M) qui migrent plus rapidement ou plus lentement que la fréquence de commutation s'éliminent par les ouvertures de sortie disposées le long du canal (4).

19. Procédé selon l'une des revendications 17 ou 18, caractérisé par le fait que le fluide porteur (T) et l'échantillon (P) ou les composants intéressants (K) se meuvent dans chaque zone du canal le long d'au moins deux portions du canal qui présentent chacune au moins une ouverture d'entrée et une ouverture de sortie et comportent des électrodes qui sont prévues au voisinage de chaque ouverture et sont reliées à une source de tension.

20. Procédé selon la revendication 19, caractérisé par le fait que les électrodes prévues, au point initial et au point final de chaque zone du canal, pour la création du champ électrique sont chacune, par paire, reliées à une source de tension continue et que l'électrode (les électrodes) située(s) entre elles est(sont) physiquement séparée(s) d'avec la source de tension.

21. Procédé selon l'une des revendications 14-20, caractérisé par le fait que le fluide porteur et l'échantillon (P) se meuvent le long d'un canal (4) conçu sous forme d'un polygone à n côtés et muni, en plus de l'ouverture d'introduction (9) pour l'échantillon, de 2n ouvertures d'entrée et de sortie (10-17).

22. Procédé selon la revendication 21, caractérisé par le fait que la différence de potentiel électrique ne commute dans la zone du canal voisine qu'après que l'échantillon soit passé dans la première portion de canal de la zone du canal voisine.

23. Procédé selon l'une des revendications 14-22, caractérisé par le fait que le canal est conçu sous forme capillaire et avec une surface de section d'environ 100 µm² à environ 5000 µm² et que l'intensité du champ électrique s'adapte aux dimensions du canal de façon que, pour une longueur théorique du canal de 1m on ne dépasse pas une puissance thermique de 1 W.

24. Procédé selon la revendication 23, caractérisé par le fait que l'on choisit la différence de potentiel pour la création du champ électrique depuis environ 100 V jusqu'à quelques kilovolts, pour des matériaux semiconducteurs, de préférence jusqu'à environ 500 V.

25. Procédé selon l'une des revendications 14-24, caractérisé par le fait que l'échantillon (P) est étudié, au moins une fois par tour complet dans le canal (4), à l'aide d'un ou plusieurs détecteurs (18, 19) disposés le long du canal (4), au point de vue de l'état de la séparation en les différents composants (K, L et M).
